# EUROPEAN PATENT APPLICATION

(11) **EP 3 035 594 A1**
(43) Date of publication of application: **22.06.2016**
(21) Application number: 13894318.8
(22) Date of filing: 02.10.2013
(51) Int. Cl.: H04L 12/24

(54) **METHOD AND SYSTEM FOR IDENTIFYING THE CAUSE OF NETWORK PROBLEMS IN MOBILE NETWORKS, AND COMPUTER PROGRAM FOR SAME**

(30) Priority: 30.09.2013 EP 13382380
(71) Applicant: Telefonica Digital España, S.L.U., 28013 Madrid (ES)
(72) Inventor: LEONTIADIS, Ilias, E-28013 Madrid (ES); Grunenberger, Yan, E-28013 Madrid (ES)
(74) Representative: Carlos Hernando, Borja
(86) International application number: PCT/ES2013/070679
(87) International publication number: WO 2015/044467

(57) **Abstract**

A method, system and computer program product for identifying the cause of network problems in mobile networks is disclosed. Embodiments of the present invention identify the root cause of problems related to connectivity and poor quality of experience preferably on user devices. The invention explores how measurements that are collected at various entities of the infrastructure can be used to automatically identify the reason for poor mobile network performance.

## Description

### Field of the art

The present invention generally relates to a method, system and computer program for identifying the cause of network problems in mobile networks, and more particularly the invention identifies the root cause of problems generally related to connectivity and poor quality of experience on user devices by exploring how measurements that are collected at various points of the infrastructure can be used to automatically identify the reason for poor mobile network performance (e.g., video buffering, disconnections, poor browsing experience, etc.).

### Background of the invention

In recent years, a number of tools have been deployed that aim to collect passive measurements from a single point. For instance, *TCPdump, WireShark* and *NetFlow* allow Internet Service Providers (ISPs) to monitor and analyze traffic flows within a network link. Furthermore, *Tstat* builds on top of these tools and it allows building and visualizing various performance metrics related to the quality of a connection. *Netalyzr* and *speedTest* allows users to measure their internet connection via running a number of local tests (e.g., transfer speeds to a remote server).

In terms of measurement platforms, *Archipelago* uses trace route to identify any topology problems within ISPs. *RIPE* use round trip time from various types to evaluate real-time connectivity and reachability with the aim understand the state of the Internet. *PerfSonar* consists of a number of tools that can be accessed remotely to provide distributed troubleshooting.

Existing solutions have one or more of the following limitations:
- Collaborative troubleshooting: Existing solutions typically use one vantage point to monitor the traffic. For example, the users can use some tools (e.g., ping, trace-route) to identify their connection status. An ISP can take its own measurements to identify problems within its own network. Similar a service provider can monitor the performance of its own datacenters. However, there is currently no integrated solution where mobile devices in collaboration with a number of measurement modules or agents in different parts of the network are used to identify the exact cause of a problem.
- Mobile devices: Most solutions target the core network and not mobile devices (e.g., wireless connectivity).
- Ground-truth and measurements from end-user devices: Previous solutions that ISP deploys depend on passively collecting information in order to infer connectivity problems within their network. There are no solutions where users can participate by crowd-sourcing information about an experienced problems either actively (e.g., by pushing a "my internet is not working properly button" or passively when their devices detect a possible problem.
- Information sharing: Existing solutions do not tackle the sharing and federation of the measured information as it involves multiple entities (e.g., end-users, ISPs, core network providers, CDN networks and, finally, service providers). The problem is that the measured information may violate privacy expectations, regulations and reveal trade secrets of the involved parties.

### Summary of the Invention

It is an object of the present invention to provide a mechanism for identifying the root cause of network problems, such as poor connectivity, efficiency, bad performance, or other parameters affecting the quality of a service within a mobile network. Embodiments of the present invention explore how measurements that are collected at various points of the infrastructure can be used to automatically identify the reason for poor mobile network performance.

According to a first aspect there is provided a method for identifying the cause of network problems in mobile networks, wherein said mobile network includes a plurality of nodes connected by links, the method comprising: measuring, by a first module in a first node, data information regarding to its network performance; and based on said measured data information and/or user input information, said first module, executing a survey to identify if a problem regarding said network performance is within said first module.

In the method, in a characteristic manner, in case said first module is unable to identify a reason for said problem: a) a communication channel is established between said first module and a second module in a second node; b) said first module, then reports an indication of said problem to said second module; c) said second module, based on data information regarding to its network performance, executes a survey to identify if the reason of said problem is within said second module. The method then, progresses along successive nodes of said network performing steps a) to c) until a cause for the problem is found in one given node.

In an embodiment, a notification of unknown cause is sent to the first node in case all the nodes of the network are reached without a response for said cause.

The above indication of said problem can be generated either automatically or manually by a user.

According to a second aspect there is provided a system for identifying the cause of network problems in mobile networks, wherein said mobile network includes a plurality of nodes connected by links. The provided system characteristically includes a module or measurement module, located in each of said nodes, configured to at least measure data information regarding to network performance of respective node; and to execute, based on said measured data information and/or user input information, a survey to identify if a problem regarding said network performance is within the module and if a cause for the problem is not found within the module, by transferring through an established communication channel an indication of said problem along at least one successive node of said mobile network.

The nodes may include any of a user computing device such as mobile phones, laptops, desktop computers or other internet-enabled devices, a fixed or a mobile Internet Service Provider to which the user computing device is connected, a core network provider, a Content Network Distribution and/or a service provider.

According to this invention, the module may include: a database for tracking the path of data across the plurality of links of said mobile network; at least one measurement unit measuring said data information regarding the network performance of said module, said data information being at least collected and stored by a data unit; and an engine generating said indication of said problem based on said executed survey.

According to yet another aspect there is provided a computer program comprising program instructions for causing a computing device to perform the proposed method for executing several tasks in a processor. Said computer program may be embodied on storing means (for example, on a record medium, on a computer memory or on a read-only memory) or carried on a carrier signal (for example, on an electrical or optical carrier signal).

The disclosed invention has the advantage of allowing users in collaboration with the involved ISPs and service providers to quickly identify the root cause of poor quality of experience related to network issues. Existing solutions either use user initiated measurements or ISP passive measurements.

The invention also allows the ISP to gather ground-truth as reported by the users with the use of a device agent that enables users to report issues, as they subjectively perceive them. This information is later used to associate certain network conditions to automatically detected problems. A semi-supervised machine-learning algorithm is used by the invention to perform this association.

The invention has the additional advantage of enabling different legal entities to co-operate by sharing troubleshooting information to troubleshoot complex problems and to lower costs.

The collaboration between users and ISPs allows them to detect emerging issues before the affect the users and possible act upon (e.g., upgrade bandwidth or make peering agreements with service providers).

Apart from defining the measurement points and the algorithms that are required to identify mobile connectivity issues, a key contribution of this invention is the fact that it addresses issues related to data ownership, sharing and federation of the monitored information.

### Brief Description of the Drawings

The previous and other advantages and features will be more fully understood from the following detailed description of embodiments, with reference to the attached, which must be considered in an illustrative and non-limiting manner, in which:
Fig. 1 is a schematic representation of the nodes or entities N1...Nn that may be involved in the present invention when delivering data.
Fig. 2 is an example of the different elements that may include each module that relies within each node or entity Nx.
Fig. 3 illustrates an example of a user reported connectivity problem and the different steps followed according to an embodiment of the present invention.

### Detailed Description of the invention

In the description, N1...Nn have to be understood as the different nodes or entities that can be involved in order to identify the root cause of network problems. In this particular case, said entities N1...Nn mainly will be, but not limited to, a user device, a fixed or a mobile Internet Service Provider, a core network provider, a Content Network Distribution and/or a service provider.

On another hand, terminology Nx will be used when referring to any of said entities, wherein x can be any of the entities 1...n.

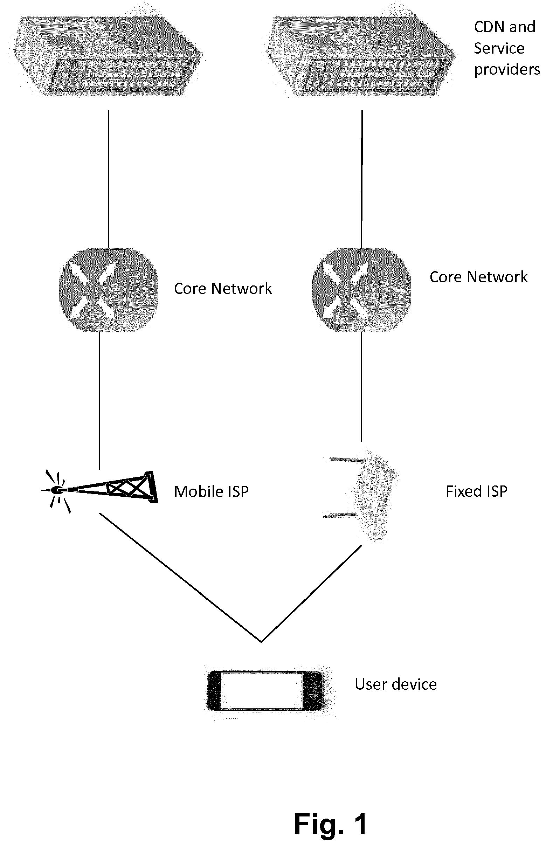

In reference to Fig. 1, any of the involved entities N1...Nn along the path of information could be the bottleneck or the cause of the problem. For instance, the user's device might not be able to correctly load and display the content. Furthermore, the user might be in an area with poor cellular or WiFi reception or the user might be constantly moving and switching from different access points. On another hand, in case of cellular connectivity, the mobile ISP might be phasing congestion problems at the location of the users (too much traffic) or backbone congestion, or if a device is connected via a fixed network (e.g., home via WiFi or Ethernet) then traffic from other devices in the same local network (e.g., connected to the same router) might be creating the problems. Likewise, the ADSL router or the DSLAM might be misconfigured or congested. Finally, the backbone of the ISP or the peering points with the service providers or the core network might be congested. Another option is that the problem relies with any ISP that routes the traffic all the way to the service provider or with the service and CDN provider (e.g., webpage or datacenters).

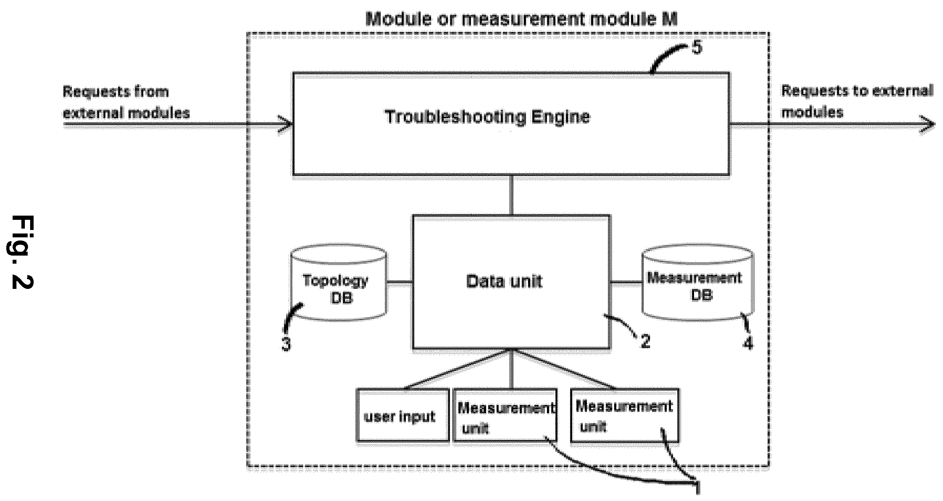

For that reason, the invention involves a number of modules or measurement modules or units M that reside within said different entities N1...Nn in order to discover quality of experience problems and identify the root cause along the path. In reference to Fig. 2 it is illustrated the different elements that each module M can include to allow performing the discovering and identification. In the present description no distinction has been made when referring to each of the modules M that can be included in each of the involved entities N1...Nn. For instance, the measurement module M of the user device has been termed equal to the measurement module M of the mobile ISP entity.

Generally, these elements will be: Measurement units 1 that are responsible to collect data related to network performance and quality of service or allow the users to input their observations; Data units or Data processing and aggregation modules 2 that are responsible to passively collect and store the data in a database 4. Furthermore this unit can take an on-demand active measurement when required; a database or Topology DB 3 storing information about the topology that is used to track the path of a piece of information across the network; and an engine or troubleshooting engine 5 that is used to collect and analyze the data in order to identify problems and their possible causes. Furthermore, said engine 5 allows each entity Nx to collaborate with others entities in order to identify problems across the whole path (from the user all the way to the service provider).

Some details about each of the entities that are involved in the data delivery are following described.

User's Devices:
Instrumented applications provide measurements from the device and application point of view. For instance, a video application monitors "buffering" events that affect the perceived quality of service. A mobile device OS (e.g., laptop/phone) monitors the signal strength with the associated cell or WiFi station. Moreover, alternatively, the users can manually report problems that include subjective opinion about the network connections. This enables the platform to connect ground truth about the actual quality of experience. Finally, the device module contains a troubleshooting engine 5 that is responsible to combine the measured or reported information to detect and handle any network-related quality of experience issues. Furthermore, the troubleshooting engine 5 is responsible to collaborate with the modules within other legal entities (e.g., ISP, service provider).

More specifically, this module allows the users to report "quality of service" issues related to their connectivity (by pressing, for instance, a "my internet is not working properly" button, although any form/button/input is also possible). The information is used to identify local issues within the users' device and to further forward this information to the involved ISPs and service providers. This also enables the providers to collect subjective ground-truth information about each application (e.g., what are accepted latencies for web content, what are acceptable speeds/qualities for video browsing. Finally, this information is then associated with the data that are gathered by the sensors and the network (e.g., are the users moving, are they at home connected to WiFi, are they in a specific geographic region?).

It also contains one or various measurement units 1 that passively and actively collect:
- Measurements related to the application's performance. For example, if a video player is loaded information such as number of events related to "buffering", average bitrate, dropped frames etc. For web browsing, statistics about transferring, loading and rendering each component are collected. Finally, for gaming application information such as latency and jitter are collected.
- Measurements related to wireless connectivity: type of connectivity (e.g., edge, 3G, LTE, 802.11gm, Ethernet, ZigBee, Bluetooth), signal strength, disconnection history, association history, etc.
- Network measurements: MAC layer and TCP/UDP statistics, bandwidth usage, etc.
- Device related statistics: CPU usage, memory usage, running apps, etc.

Finally, the troubleshooting engine 5 combines the measured data with the manual reports to create a mapping between the conditions that can lead to perceived quality degradation. Semi-supervised learning algorithms are used to automatically identify application issues without user interaction. More specifically, prior user-initiated reports are associated to specific network conditions. When similar conditions are met (by the same or any other user), an automatic report is generated without the user interaction. It has to be noticed that, in some cases the user might be probed for further feedback. Finally, a combination of static thresholds is used to also trigger an automated report (e.g., if number of buffering events exceeds a threshold).

Mobile ISP:
If the user device is connected to a cellular network, the provider uses a module to troubleshoot issues from their point of view of the network (For example, to identify congestion in certain parts of the network (e.g., a tower) or to pinpoint underperforming middle-boxes within the network). As with the mobile device, a troubleshooting engine 5 is responsible to collect and handle the measured information and the troubleshooting requests. Similarly with the device measurement module, the mobile ISP contains a measurement module that can: passively collect information related to each base station: number of users, utilization, QoS policies; passively collect information related to the backbone connectivity: utilization, TCP/UDP performance (RTT, loss rates, etc.); passively collect information related to the performance any middle-boxes: web proxies, deep packet inspectors, routers, etc.; maintain the topology of the object exchanged so the path that was taken through the network can be traced if required by an inquiry and as with the previous modules, the troubleshooting engine 5 is also used to automatically identify errors or investigate issues reported by the users' mobile devices.

Wired ISP:
The Wired ISP measurement modules are responsible also to identify issues within the ISPs network. For residential connections the home router is instrumented with a measurement module to identify issues related to the quality of the local wireless and wired connectivity. Furthermore, modules deeper in the ISP (e.g., DSLAM, routers, peering points) also provide measurements. As with the mobile device, a troubleshooting engine 5 is responsible to collect and handle the measured information and the troubleshooting requests.

An instrumented gateway (router) can passively collect information related to:
- The connectivity of each associated wireless and wired client of the home/business/public network (e.g., signal strength, utilization, bitrate, packet loss).
- Information about the network status and load of the wireless and the wired interfaces (e.g., bandwidth utilization, loss rates, retransmissions, round trip times).
- Information related to the configuration of the router (QoS policies, allowed ports, access lists etc.).

The wired ISP also installs modules across its own backbone to collect information related to the performance any middle-boxes, routers, peering etc. Finally, as with the previous modules, the troubleshooting engine 5 is used to automatically identify errors or investigate device reported issues related to local Wi-Fi connectivity or within the ISPs network.

Core Network and Service Provider:
Core Network modules are used to identify issues with peering and backbone congestion or misconfiguration as with the mobile wired ISP bones middle boxes are used to take measurements and a troubleshooting engine 5 is used to automatically identify errors and to investigate any device/ISP initiated requests.

In the present invention, preferably data is collected and owned separately by each involved entity Nx (e.g., the user's device, the mobile ISP, in theory any organization or provider that is involved in delivery a data object from a service to a user can participate). Furthermore, each entity Nx runs its own instance of a measurement module M that can only access the internal data to identify any possible causes within an organization. The modules across different organizations are using the proposed mechanism to collaborate in order to identify the exact cause of a problem. In that process only the abstracted information is revealed between the involved parties. Finally, a query to identify an issue is forwarded to the next entity Nx along the path of the data only when the local data indicate that there is no local problem.

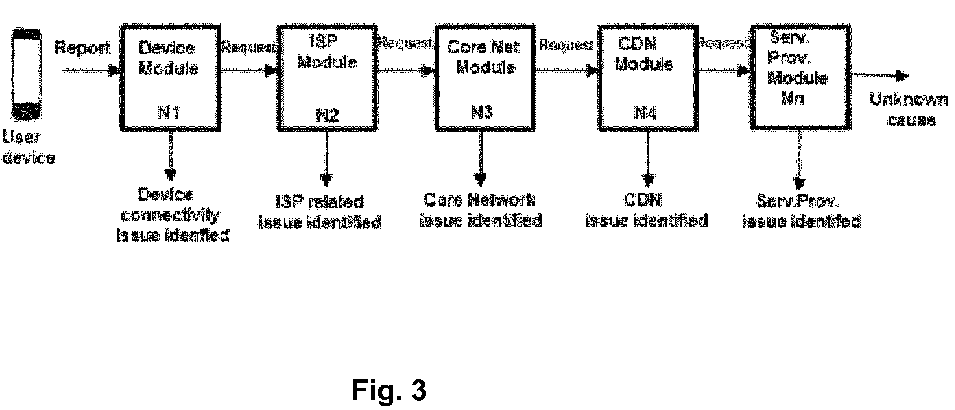

In reference to Fig. 3 it is illustrated an example when a user has reported a connectivity problem. First, the user reports an issue with connectivity or quality of experience (alternatively the request to troubleshoot an issue can also be automatically generated). Then, the application and device module use the collected data to identify if the reason is within the device (e.g., poor signal strength, missing codecs, not enough memory, other applications are using the bandwidth). Only information that is collected and owned by the user's device is used. If the reason is identified the issue is considered solved and the user and/or the service provider are notified. If the reason is not identified then the local troubleshooting unit 5 generates a request for further investigation is forwarded to the instance running at the ISP (mobile or fixed) that provides the connectivity. Only the required information such as the timestamp, the objects that caused the issue is shared to help the ISP identify the flow within its own network. Similarly, when the module of the ISP receives a request from a mobile user, it uses its own repository to identify if the problem lies within its own network. Information owned by the ISP such as base station load is used to identify any problems at the specific time/location of the user. In the same way, collected information from the backbone and middle-boxes are also used to identify any causes there. As with the device module, if no issue is detected within the ISP a request if forwarded further towards the core network that served this request. The troubleshooting engine 5 of the ISP can also detect a problem (even when initiated by a user's device. As before a request is forwarded to the corresponding modules to further investigate the root cause of the issue. In a similar manner, if the issue is not identified, further requests can be further forwarded all the way to the service provider (e.g., web host or video provider).

Therefore, in the proposed mechanism this sand-boxed iterative process addresses all the aforementioned data sharing issues while providing the ability to track problems across different entities N1...Nn.

Apart from the modules M that measure the performance within each entity Nx and the interaction across them, the invention also defines the steps and algorithms required in order to identify a possible issue and pinpoint its cause. Data from the measurement modules M are preferably encoded using the JSON format (However, any communication protocol or data encoding protocol could be also used.). The same encoding is used for the communication between the entities N1...Nn. For the communication between components a REST-ful API is preferably used:
- POST is used to upload measurements to the aggregator and to submit queries across component. Furthermore, it is used to provide the necessary notifications.
- GET is used to read
- DELETE and PUT are only allowed internally within each entity Nx to modify or delete data.

Data from the measurement points and the external modules are collected by a "data aggregator component". In this instance two parallel instances are generated: 1. a copy of the data is stored in the database for post-process evaluation. 2. a copy of the data are delivered to real-time streaming analysis engine. The main functions of this engine are to:
Investigate requests to resolve an issue: When a request is made either by an external entity or internally (e.g., by the user) then the passively collected information in the database is used to pinpoint the exact cause. Standard threshold-based mechanisms are used in this case. For instance the engine evaluates whether there was enough available bandwidth at the links that the object went through.

Associate measurements to issues: A streaming active learning algorithm is used to associate possible issues to measurements. For instance as people click the "my internet is not working button" then the active learning algorithm associates possible local conditions that typically result in poor experience. This information is used to automatically generate future reports without requesting explicit user interaction. This is a key part of the invention as it allows the ISP to collect ground-truth and crowd source quality of experience issues.

Automatically identify issues as they happen: Similarly, the active learning approach is used (in combination with supervised learning) to identify issues as they build up and warn the interested parties before they affect their network.

Distributed troubleshooting: The topology information is used in every stage to identify the paths that each object took within the network. Therefore, if an error is not found within an entity Nx then the troubleshooting engine 5 is responsible to forward a troubleshooting request to the appropriate "next hop" that handled the data and handle any replies. Furthermore, as replies back the troubleshooting engine 5 associates measurements to external problems.

Following are detailed some, not limited to, of the problems that can be identified by the present invention.

| Issue | Entity (Nx) detected | Possible measurements |
|---|---|---|
| Configuration issues | User's device | Application API, OS API (e.g., missing codecs) |
| Inadequate CPU | User's device | Device CPU usage, video frames dropped |
| Inadequate memory | User's device | Low device memory, low refresh rates, high object allocation latency |
| Poor signal strength | User's device | Low RSSI, dropped packets, high retransmissions |
| Frequent disconnections/mobility | User's device | Network state (connected non-connected), AP changes, rapid modulation and state changes |
| Poor wireless network speeds | User's device | Type of connectivity (GPRS, Edge, 3g, LTE) |
| High network usage | User's device | High traffic from other apps or the OS. |
| Network inaccessible | User's device | Network not configured (e.g., no IP) or no packets exchanged with gateway |
| Wi-Fi Congestion | Router | Signal strength, high contention windows, percentage of time medium was busy, high transfer rates |
| ADSL/cable/FTTH link congested or underperforming | Router/DSLAM/ISP | High utilization, high transfer rates, high ping times, packet loss, TCP/IP metrics |
| Gateway Router issues | Router | High router CPU/Memory usage, large latency to forward a packet, queues, misconfiguration |
| Cellular base station congestion | Mobile ISP | High utilization, number of associated clients, lost frames, frequencies in use |
| Cellular base station issues | Mobile ISP | High latency, lost packets, RNC misconfiguration |
| Mobile ISP backbone | Mobile ISP | High utilization, high transfer rates, high ping times, packet loss, TCP/IP metrics, router statistics |
| Mobile ISP middle boxes | Mobile ISP | CPU/Memory, latency to process a request, logs |
| Mobile ISP peering | Mobile ISP | Peering utilization, latency, lost packets |
| Fixed ISP backbone | Fixed ISP | High utilization, high transfer rates, high ping times, packet loss, TCP/IP metrics, router statistics |
| Core Network Issues | Core Network | High utilization, high transfer rates, high ping times, packet loss, TCP/IP metrics, router statistics |
| Content Delivery Network | CDN | Selected server, load, CPU load, memory load, network utilization, latency to serve an object/query, disk/memory access time and utilization, cache hit ratios, number of users served |
| Service provider | Service provider | Selected server, load, CPU load, memory load, network utilization, latency to serve an object/query, disk/memory access time and utilization, number of users served |

In an embodiment, for instance for the case of a poor YouTube® video streaming performance and a user device receiving a poor signal, the YouTube® application will start pausing and buffering. The user will report this issue to the device measurement module M or the module M itself will detect the problem. This will trigger an investigating of the possible causes. The device's module M will evaluate the wireless connectivity conditions and identify that the current signal strength is not enough to sustain video streaming applications. Indications about this are i) the low RSSI, the ii) type of the communication protocol (e.g., no 3G) or iii) a lot of packets lost or retransmitted. In this case the user will be notified. Furthermore, the ISP will also receive a notification, as this will help planning the future network coverage but no further investigation will be required. Finally, the machine-learning algorithm will adapt to better associate this type of conditions to the reported quality of experience problems.

In another embodiment, for instance for a poor YouTube® video streaming performance and a congested cell tower, as before, the YouTube® application and the user's device will try to troubleshoot the problem but no cause will be found. Therefore, they will forward a request for further troubleshooting to the ISP. The measurement module M of the ISP will receive this request and will evaluate the conditions at the user's tower. If an error is identified then i) the user's module will be notified ii) the ISPs module will adapt to associate these types of conditions with possible quality of experience problems and iii) a warning will be logged within the ISP to help planning future expansions and network provisioning. Similarly, no other requests will be given. In this case the user will be notified. Furthermore, the ISP will also receive a notification, as this will help planning the future network coverage. However, the ISP will not probe for further investigation.

In yet another embodiment, for instance for a poor YouTube® video streaming performance and a congested service provider (YouTube®), the same steps will be taken as before. However, as no issue will be detected within the device and the ISP the query will reach the service provider. In this case the provider will use its own measurement to identify the cause. In this case the user will be notified. Furthermore, the ISP will also receive a notification, as this will help to further associate request for similar troubleshooting with the cause. Finally, the service provider will also get a warning to make further provisioning (e.g., redirect traffic).

Even though in this proposal user devices has been describe primarily as the end-clients of the service, any other internet-enabled device or organization, such as ISPs, vehicles, IPTV boxes, smart TVs, can also provide measurements and initiate a request for further probing

In Fig. 3 is illustrated a linear way to perform troubleshooting: if a device has a connectivity problem that is not originated local, it consults the ISP, if the problem is not found within the ISP it consults the core network etc. However, such a linear approach might be not always necessary. For instance if the device detects that a resource (e.g., a video) is not available it might directly query the service provider (skipping all the middle steps). Therefore, the troubleshooting entities N1...Nn can directly communicate any other entity Nx depending on the diagnosis.

Alternatively to the active learning algorithm in combination of triggers for performing data processing and troubleshooting other techniques (e.g., statistical models) can also be also used to detect or identify the cause of events.

Finally, the described a process can start from any of the involved entities N1...Nn. For example, if an ISP (not a user) is experiencing a problem with a specific connection then a request for investigation can be made.

The scope of the present invention is described in the enclosed claims.

## Claims

1. A method for identifying the cause of network problems in mobile networks, wherein said mobile network includes a plurality of nodes connected by links, the method comprising:
- measuring, a first module in a first node, data information regarding to its network performance; and
- said first module, based on said measured data information and/or user input information, executing a survey to identify if a problem regarding said network performance is within said first module,
**characterized in that** the method comprises in case said first module being unable to identify a reason for said problem:
a) establishing a communication channel between said first module and a second module in a second node;
b) reporting, said first module, an indication of said problem to said second module;
c) said second module, based on data information regarding to its network performance, executing a survey to identify if the reason of said problem is within said second module; and
progressing along successive nodes of said network performing steps a) to c) until a cause for the problem is found in one given node.

2. A method according to claim 1, comprising sending a notification to said first node of unknown cause in case all the nodes of the network are reached without a response for said cause.

3. A method according to claim 1, wherein the measured data information is collected and owned separately between each of the modules.

4. A method according to any of previous claims, wherein said first module is implemented in a user computing device and said second module is implemented in at least a fixed or mobile internet service provider to which said user computing device is connected.

5. A method according to any of previous claims 1 to 3, wherein said first module is implemented in a user computing device and said second module is implemented in a service provider.

6. A method according to claims 1, 4 or 5, wherein the reporting of said indication of said problem is automatically generated.

7. A method according to claims 1, 4 or 5, wherein the reporting of said indication of said problem is manually generated by a user.

8. A method according to previous claims, wherein said indication comprises information indicating at least a timestamp of the identification of said problem and/or the object causing the problem.

9. A method according to previous claims, wherein said problem comprises at least efficiency, bad performance, connectivity problems of the different modules or other parameters affecting the quality of a service within said mobile network.

10. A method according to claim 1, wherein the measured data and/or the user inputs are associated with predetermined network problems.

11. A system for identifying the cause of network problems in mobile networks, wherein said mobile network includes a plurality of nodes (N1...Nn) connected by links, **characterized in that** the system comprises a module (M), located in each of said nodes (N1...Nn), configured to at least measure data information regarding to network performance of respective node; and to execute, based on said measured data information and/or user input information, a survey to identify if a problem regarding said network performance is within the module (M) and if a cause for the problem is not found within the module (M), by transferring through an established communication channel an indication of said problem along at least one successive node of said mobile network.

12. A system according to claim 11, wherein said nodes (N1...Nn) comprises any of a user computing device, a fixed or a mobile Internet Service Provider to which the user computing device is connected, a core network provider, a Content Network Distribution and/or a service provider.

13. A system according to claim 11, wherein said module (M) at least comprises:
- a database (3) tracking the path of data across said plurality of links of said mobile network;
- at least one measurement unit (1) measuring said data information regarding the network performance of said module (M), said data information being at least collected and stored by a data unit (2); and
- an engine (5) generating said indication of said problem based on said executed survey.

14. A computer program product comprising program instructions for causing said user computing device to carry out the method by executing several tasks in a processor according to steps of claim 1.
